Europäisches Patentamt

European Patent Office

Office européen des brevets

(19)

(11) Numéro de publication : **0 115 518**
**B1**

(12) # FASCICULE DE BREVET EUROPÉEN

(45) Date de publication du fascicule du brevet :
**03.12.86**

(51) Int. Cl.⁴ : **B 66 C 1/36**

(21) Numéro de dépôt : **83902642.4**

(22) Date de dépôt : **08.08.83**

(86) Numéro de dépôt international :
**PCT/FR 83/00166**

(87) Numéro de publication internationale :
**WO/8400744 (01.03.84 Gazette 84/06)**

(54) **PERFECTIONNEMENTS AUX CROCHETS DE SECURITE.**

(30) Priorité : **06.08.82 FR 8214027**

(43) Date de publication de la demande :
**15.08.84 Bulletin 84/33**

(45) Mention de la délivrance du brevet :
**03.12.86 Bulletin 86/49**

(84) Etats contractants désignés :
**BE CH DE FR GB LI NL SE**

(56) Documents cités :
**EP-A- 0 002 396**
**FR-A-  946 394**
**FR-A- 1 574 978**
**GB-A-  200 029**
**GB-A-  550 162**
**US-A- 1 390 023**
**US-A- 1 411 857**
**US-A- 1 465 804**
**US-A- 1 716 997**
**US-A- 1 725 609**

(73) Titulaire : **LE BEON, Roger**
**7 Boulevard Louis Nail B.P. 138**
**F-56103 Lorient Cédex (FR)**

(72) Inventeur : **LE BEON, Roger**
**7 Boulevard Louis Nail B.P. 138**
**F-56103 Lorient Cédex (FR)**

(74) Mandataire : **Dubreuil, Annie**
**Cabinet DUBREUIL 7, rue de Keroman**
**F-56100 Lorient (FR)**

Jouve, 18, rue St-Denis, 75001 Paris, France

## Description

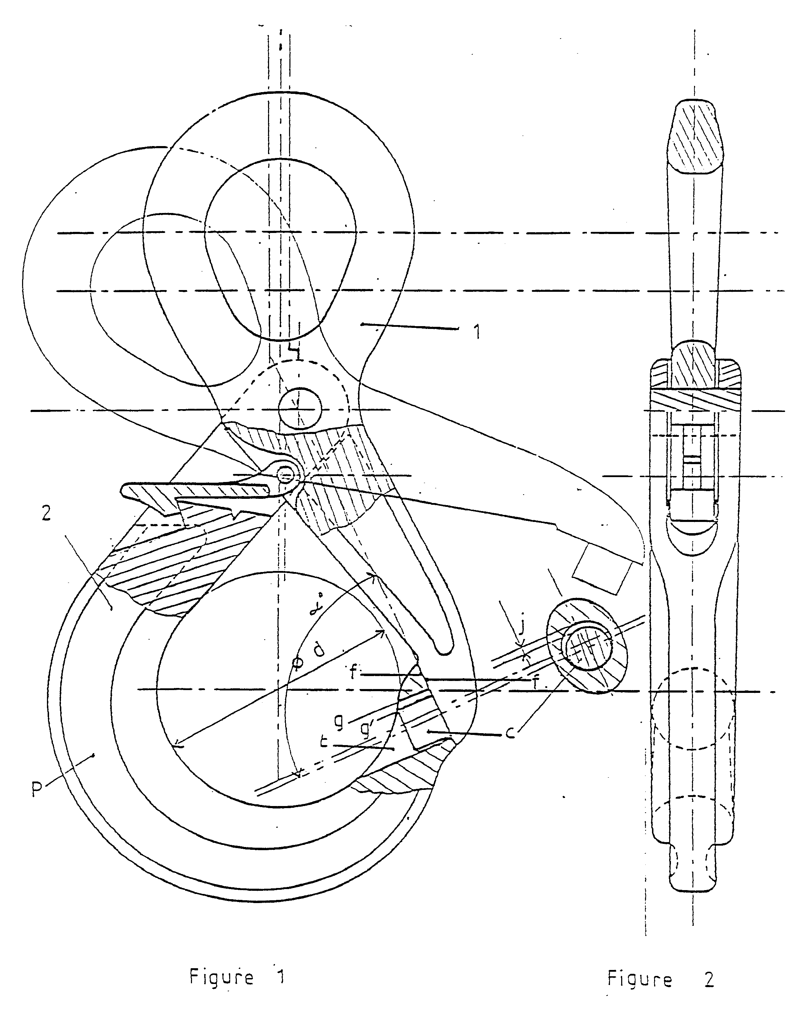

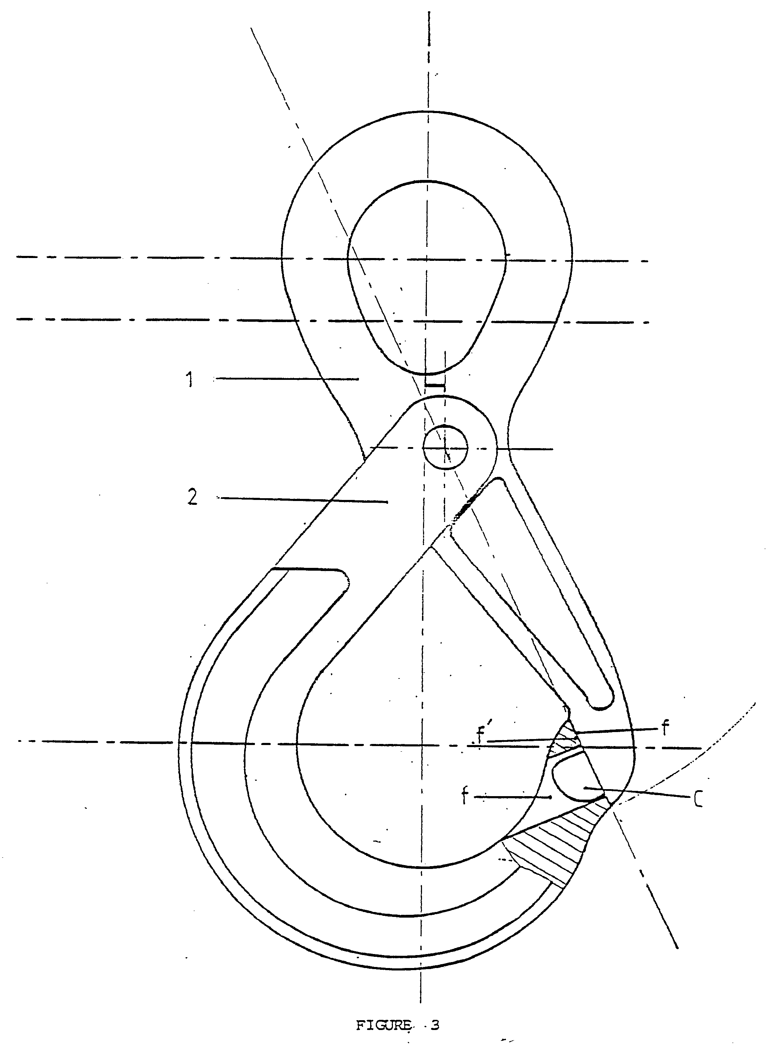

La présente invention concerne les crochets de sécurité et plus particulièrement, ceux munis d'un linguet articulé sur le corps du crochet dans la partie haute et s'ouvrant vers l'extérieur dudit crochet selon la figure 1.

Le crochet de sécurité est tenu par la partie haute du linguet. Sous tension, la fermeture du linguet est automatique, l'extrémité libre du linguet venant en contact avec la pointe du corps du crochet et faisant obstacle à tout dégagement accidentel de la charge.

L'utilisation de ce type de crochet de sécurité est de plus en plus courante, surtout dans les cas de manutention où les risques d'accidents sont grands : sur les chantiers de bâtiments par exemple. Ce modèle de crochet est simple, efficace et sûr.

Toutefois, les modèles connus présentent certains inconvénients :

Le corps du crochet supporte la totalité de la charge à laquelle il est soumis et même plus : en effet, sous tension, l'extrémité libre du linguet vient s'appuyer sur la pointe du corps du crochet et exerce un effort vers le bas d'autant plus important que la charge est plus lourde (voir figure).

Cet effort s'ajoute à celui de la charge et tend à déformer plus rapidement le corps du crochet sous charge. Ceci oblige à prévoir à charge égale, un surdimensionnement de la partie fonctionnelle (P) du corps du crochet, partie où la contrainte dans la matière du corps du crochet est maximale.

Ce surdimensionnement du crochet entraîne un accroissement du poids qui rend les crochets de haut calibre lourds, encombrants, dangereux à manipuler.

De longue date, on a tenté de remédier à ces inconvénients.

Les perfectionnements connus consistent à réaliser sur les extrémités du corps du crochet, et du linguet, une forme de crochet de telle façon que lorsque l'on ferme le linguet, les formes de crochet solidarisent le linguet et le corps du crochet. (Voir GB-A-111 850 de VOORWINDE).

Le linguet contribue ainsi à supporter directement une partie de la charge et constitue une retenue de l'extrémité du corps du crochet, l'empêche de plier sous l'effet de la charge, et permet d'alléger le corps du crochet.

Ce système a été perfectionné par la suite en le combinant avec un système de verrouillage entre le linguet et le corps du crochet. On peut citer le brevet US-A-1 430 824 d'ABEL MARTIN qui décrit un verrouillage au moyen d'une proéminence de forme conique. L'inconvénient d'un tel système est le manque de sécurité en charge. D'ailleurs, la structure du crochet est compliquée et peu pratique à mettre en œuvre.

On peut également citer les brevets suivants :
US-A-2 476 847 de DOBSON,
US-A-2 462 965 de HENDERSON,
US-A-2 436 792 de DAHLANDER,

US-A-2 359 557 de HOFFMAN.

Plus récemment les perfectionnements ont porté principalement sur les systèmes de verrouillage des crochets, mais avec le même principe d'accrochage des extrémités du linguet et du corps du crochet US-A-2 785 015 de DORTON et EP-A-0 002 396 qui décrit un crochet de manutention équipé d'un ergot. Malheureusement, pour assurer la fermeture du crochet, on doit déplacer verticalement le levier de verrouillage, ce qui n'est ni une opération simple, ni une opération sans risque.

Les brevets ou projets de crochets de sécurité décrivant un système d'accrochage linguet-crochet sont extrêmement nombreux. Malgré cela, aucun crochet de ce type n'a connu ou ne connaît à l'heure actuelle une diffusion importante. La plupart ont connu un échec industriel ou commercial.

En fait, ces crochets comportent des inconvénients.

Les formes des extrémités du linguet et du corps qui réalisent l'accrochage désiré sont trop complexes. En processus industriel, elles sont difficiles à réaliser, coûteuses et de dimensions peu précises.

D'autre part, le principe de ces crochets est tel qu'il y a contact entre les extrémités du linguet et du corps dès la fermeture du crochet, ce qui entraîne sous charges des contraintes importantes sur le système d'accrochage qui est soumis de ce fait à la totalité de la charge, ce qui oblige à surdimensionner le linguet et par voie de conséquence, à alourdir l'ensemble du crochet.

L'avantage de ces crochets est donc loin d'être évident ce qui explique qu'ils n'aient pas supplanté les crochets traditionnels.

La présente invention a pour but de remédier aux inconvénients de ces crochets. Elle vise à mieux répartir les contraintes dans les pièces constitutives du crochet, diminuer le poids des crochets, et permettre une fabrication industrielle et peu coûteuse, tout en assurant une sécurité accrue.

L'invention concerne donc les crochets de sécurité munis d'un linguet articulé sur le corps du crochet dans sa partie haute et s'ouvrant vers l'extérieur dudit crochet et dotés d'un dispositif de retenue de l'extrémité libre du corps du crochet par l'extrémité libre du linguet, de manière à ce que, sous charge, le corps du crochet ne se déforme prématurément et caractérisé en ce que ce dispositif de retenue est constitué d'une face plane de contact sur chacune des pièces : linguet et corps, ces faces planes recevant l'une, une proéminence ayant la forme d'un cylindre dont l'axe est perpendiculaire à ladite face plane, l'autre un trou de forme cylindrique dont l'axe est perpendiculaire à ladite face plane, de dimensions plus grandes que ledit cylindre et situé de telle façon qu'à la fermeture du crochet, le cylindre pénètre dans le trou cylindrique. A l'inverse, le cylindre peut se trouver sur le corps et le trou, sur le linguet du crochet.

Pour éviter tout dégagement du cylindre et du trou lorsque le crochet est sous charge, ce dispositif de retenue est orienté de telle façon que l'angle ayant pour sommet le point défini par l'intersection soit de l'axe du cylindre, soit celui du trou cylindrique, soit l'une ou l'autre des génératrices de contact du cylindre et du trou cylindrique avec le plan de contact des extrémités du linguet et du corps du crochet, et pour côtés : d'une part, l'un ou l'autre desdits axes et génératrices, d'autre part, une droite reliant ledit sommet à l'axe d'articulation du linguet et du corps du crochet, et s'ouvrant vers l'espace intérieur ménagé entre le linguet et le corps du crochet, soit inférieur à 90°.

Pour obtenir un bon fonctionnement du dispositif de retenue, une bonne ouverture ou fermeture du crochet, cet angle doit avoir une valeur comprise entre 80 et 90°.

Pour assurer une bonne répartition des contraintes entre le corps du crochet et le linguet, il existe un jeu dans le dispositif de retenue entre les génératrices de contact du cylindre et du trou cylindrique, le crochet étant au repos en position fermée.

Ce jeu est beaucoup plus important que le jeu normalement nécessaire au bon fonctionnement mécanique du crochet de sécurité. Lorsque le crochet est soumis à une charge modérée pour laquelle il a été conçu, le corps du crochet supporte seul la charge à laquelle il est soumis, il n'y a pas contact entre le cylindre et le trou du dispositif de retenue.

Lorsque le crochet est soumis à une charge importante, le corps soumis à cette charge, va subir un fléchissement élastique annulant le jeu entre le cylindre et le trou cylindrique qui vont donc entrer en contact, les faces planes de contact entre le linguet et le corps ayant glissé l'une sur l'autre. La surcharge va donc être supportée par le linguet par l'intermédiaire du dispositif de retenue. Quelle que soit l'importance de la charge appliquée, le corps du crochet ne subira alors aucune déformation supplémentaire. Ce principe permet donc de limiter les contraintes dans le corps du crochet donc de l'alléger par rapport à un crochet sans dispositif de retenue, et de faire supporter au linguet uniquement les surcharges, donc d'alléger le linguet par rapport aux linguets des crochets avec dispositifs de retenue connus.

Pour un bon fonctionnement du dispositif de retenue tel qu'il a été décrit ci-dessus, le jeu entre le cylindre et le trou cylindrique doit être compris entre 0,02 et 0,04 fois le diamètre du cercle inscriptible dans l'espace intérieur défini par le linguet et le corps du crochet.

De cette façon, il est possible d'obtenir un crochet moitié moins lourd qu'un crochet classique sans dispositif de retenue.

Cet allègement considérable procure aux crochets conçus, selon l'invention, un avantage déterminant dans la manipulation des crochets tant par l'aisance que par la sécurité de manipuler des crochets moins lourds.

Le dispositif de retenue selon l'invention, présente par ailleurs l'avantage de pouvoir être réalisé d'une manière très économique industriellement par estampage du corps du crochet et du linguet et par perçage du trou cylindrique.

Selon une variante de l'invention, le trou cylindrique pourrait prendre une forme légèrement aplatie par écrasement mécanique de l'extrémité du corps du crochet ou du linguet d'un coût très modique en processus industriel. Le cylindre pourrait avoir également une forme équivalente.

Pour éviter tout risque d'obstruction du trou par des corps étrangers, sable ou gravier, par exemple, si le crochet de sécurité selon l'invention est utilisé sur des chantiers de bâtiments, le trou cylindrique est débouchant.

De cette façon, tout corps étranger s'étant introduit malencontreusement dans le trou cylindrique, sera expulsé à la fermeture du crochet par le cylindre et ne gênera pas le bon fonctionnement du crochet, ce qui n'est pas le cas si le trou est non débouchant ou conique.

On voit donc clairement que le crochet de sécurité selon l'invention a un fonctionnement mécanique fondamentalement différent des crochets existants et présente l'avantage fondamental d'un poids bien moindre et d'une manipulation plus aisée et moins dangereuse.

Selon une forme de réalisation préférentielle d'après les figures 1 et 2, le crochet de sécurité décrit comporte un linguet (1) articulé sur le corps du crochet (2). Les extrémités libres du linguet et du corps du crochet comportent chacune une face plane de contact (f, f') passant par l'axe d'articulation du linguet et du corps du crochet. La face plane de l'extrémité du linguet comporte un pion cylindrique d'axe perpendiculaire à la face plane. La face plane du corps du crochet comporte un trou cylindrique percé et débouchant de diamètre légèrement supérieur à celui du pion et d'axe perpendiculaire à la face plane. Lorsque l'on ferme le crochet à vide, les faces planes du linguet et du corps du crochet, viennent en contact et le pion pénètre dans le trou, avec un jeu réduit au minimum en partie basse, et laissant un jeu (j) important entre les génératrices (g, g') de contact du pion cylindrique et du trou de 0,025 fois le diamètre (d). Lorsque le crochet est soumis à une charge modérée, le corps du crochet subit un fléchissement modéré insuffisant pour provoquer le contact des génératrices (g) et (g'). Le corps du crochet subit alors seul la totalité de la charge.

Lorsque le crochet est soumis à une charge importante, le corps du crochet subit sous l'effet de cette charge, un fléchissement important qui provoque un glissement relatif des faces planes de contact du linguet et du corps et le contact des génératrices (g) et (g') du pion et du trou annulant le jeu (j).

A ce stade, le crochet ne subit plus de déformation supplémentaire, donc de contrainte supplémentaire importante. L'effort est encaissé par le linguet par l'intermédiaire du pion.

Ainsi, sous une charge importante, les contraintes engendrées sont réparties entre le corps du crochet et le linguet, ce qui permet de concevoir un crochet léger donc de manipulation aisée et moins dangereuse que les crochets connus.

Le crochet décrit, présente en outre l'avantage d'être de réalisation industrielle simple et peu onéreuse par estampage du linguet et du corps du crochet, le trou cylindrique étant obtenu par perçage avec un foret.

On voit donc que ce crochet de sécurité présente des avantages déterminants par rapport à ceux connus, notamment par son poids, l'aisance et la sécurité de sa manipulation, la simplicité et le coût modique de sa réalisation industrielle.

L'invention est applicable à tous les crochets de sécurité munis d'un linguet articulé sur le corps du crochet dans sa partie haute et s'ouvrant vers l'extérieur dudit crochet en particulier ceux fabriqués industriellement et destinés à toutes les industries, le bâtiment, les travaux publics, l'agriculture et d'une manière générale à toutes les activités nécessitant le levage de charges.

**Revendications**

1. Crochet de sécurité muni d'un linguet articulé (1) sur le corps du crochet (2) dans sa partie haute s'ouvrant vers l'extérieur dudit crochet et doté d'un dispositif de retenue de l'extrémité libre du corps du crochet par l'extrémité libre du linguet, ce dispositif de retenue étant constitué d'une face plane de contact (f, f') sur le linguet et le corps, ces faces planes recevant l'une, une proéminence (c), dont l'axe est perpendiculaire à ladite face plane, l'autre comportant un trou (t) dont l'axe est perpendiculaire à ladite face plane, de dimensions plus grandes que ladite proéminence et située de telle façon qu'à la fermeture du crochet, elle pénètre dans le trou (t), ce dispositif constituant ainsi une retenue du corps du crochet par le linguet, ledit crochet de sécurité étant caractérisé en ce que ladite proéminence (c) et ledit trou (t) ont une forme cylindrique, et en ce que les moyens de retenue coopèrent entre eux de telle sorte que le crochet étant en repos en position fermée, il existe dans le dispositif de retenue un jeu (j) entre les génératrices de contact (g) et (g') du cylindre et du trou cylindrique, beaucoup plus important que le jeu normalement nécessaire au bon fonctionnement mécanique du crochet de sécurité, ce qui permet d'une part au corps du crochet de supporter seul la charge pour laquelle il a été conçu, sans qu'il y ait contact entre le cylindre et le trou cylindrique du dispositif de retenue, ou d'autre part, au linguet de supporter les surcharges grâce au contact établi entre le cylindre et le trou cylindrique après rattrapage du jeu dû au fléchissement élastique du corps du crochet.

2. Crochet de sécurité selon la revendication 1, caractérisé en ce que l'angle (α) ayant pour sommet le point défini par l'intersection soit de l'axe du cylindre, soit celui du trou cylindrique avec le plan de contact des extrémités du linguet et du corps du crochet, et pour cotés, d'une part l'un ou l'autre desdits axes, et, d'autre part une droite reliant ledit sommet à l'axe d'articulation du linguet et du corps du crochet, cet angle s'ouvrant vers l'espace intérieur ménagé entre le linguet et le corps du crochet, a une valeur comprise entre 80 et 90 degrés assurant ainsi le bon fonctionnement du dispositif de retenue et une bonne ouverture ou fermeture du crochet.

3. Crochet de sécurité selon l'une des revendications précédentes, caractérisé en ce que le jeu (j) est compris entre 0,02 et 0,04 fois le diamètre du cercle inscriptible (d) dans l'espace intérieur défini par le linguet et le corps du crochet.

4. Crochet de sécurité muni d'un dispositif de retenue selon l'une des revendications précédentes, caractérisé en ce que le trou du dispositif de retenue a une forme cylindrique aplatie.

5. Crochet de sécurité muni d'un dispositif de retenue selon l'une des revendications précédentes, caractérisé en ce que le cylindre du dispositif de retenue a une forme aplatie.

6. Crochet de sécurité muni d'un dispositif de retenue selon les revendications précédentes, caractérisé en ce que le trou cylindrique débouche de façon à permettre le dégagement de tout corps étranger dudit trou.

**Claims**

1. Safety hook provided with a pawl (1) articulated on the body of the hook (2) in its upper part opening towards the outside of the said hook and equipped with a device for retention of the free extremity of the hook body by the free extremity of the pawl, this retention device comprising a plane surface of contact (f, f') on the pawl and the body, these plane surfaces receiving, in the case of the one, a projection (c) of which the axis is perpendicular to the said plane surface, the other comprising a hole (t) of which the axis is perpendicular to the said plane surface, of greater dimensions than the said projection and positioned in such a manner that upon closing the hook, it penetrates into the hole (t), this device thus constituting a retention of the hook body by the pawl, the said safety hook being characterised in that the said projection (c) and the said hole (t) have a cylindrical shape and in that the retention means cooperate with each other in such a manner that when the hook is at rest in the closed position, a clearance (j) exists in the retention device between the contact generatrixes (g) and (g') of the cylinder and of the cylindrical hole, which is much greater than the clearance normally needed for satisfactory mechanical operation of the safety hook, which on the one hand enables the hook body to support by itself the load for which it was designed, without contact existing between the cylinder and the cylindrical hole of the retention device, or on the other hand, enables the pawl to bear overloads due to the contact established between the cylinder and the cylindrical hole after take-up of the clearance caused by the elastic flexing of the hook body.

2. Safety hood according to claim 1, characterised in that the angle ($\alpha$) having as its apex the point defined by the intersection between either the axis of the cylinder or that of the cylindrical hole with the contact plane of the extremities of the pawl and of the hook body, and as its sides one or the other of the said axes on the one hand, and on the other hand a straight line connecting the said apex to the axis of articulation of the pawl and of the hook body, this angle opening towards the inner space present between the pawl and the hook body having a value comprised between 80 and 90 degrees, thus assuring satisfactory operation of the retention device and satisfactory opening or closing of the hook.

3. Safety hook according to one of the preceding claims, characterised in that the clearance (j) is comprised between 0.02 and 0.04 times the diameter of the circle (d) which may be inscribed in the inner space defined by the pawl and the hook body.

4. Safety hook provided with a retention device according to one of the preceding claims, characterised in that the hole of the retention device has a flattened cylindrical shape.

5. Safety hook provided with a retention device according to one of the preceding claims, characterised in that the cylinder of the retention device has a flattened shape.

6. Safety hook provided with a retention device according to the preceding claims, characterised in that the cylindrical hole opens in such a manner as to allow dispersal of any foreign body from the said hole.

**Patentansprüche**

1. Sicherheitshaken, versehen mit einem Sperrhebel (1), der an dem Körper des Hakens (2) an seinem oberen, sich zur Außenseite des genannten Hakens öffnenden Teil angelenkt ist, und ausgestattet mit einer Vorrichtung zum Halten des freien Endes des Hakenkörpers durch das freie Ende des Sperrhebels, wobei diese Haltevorrichtung aus einer ebenen Kontaktfläche (f, f') an dem Sperrhebel und dem Körper gebildet ist, wobei eine dieser ebenen Flächen einen Vorsprung (c) aufnimmt, dessen Achse senkrecht zu der genannten ebenen Fläche ist, und die andere ein Loch (t) aufweist, dessen Achse senkrecht zu der genannten ebenen Fläche ist und dessen Abmessungen größer sind als die des genannten Vorsprungs, welcher derart gelegen ist, daß er beim Schließen des Hakens in das Loch (t) eindringt, wobei ferner diese Vorrichtung einen Rückhalt für den Hakenkörper durch den Sperrhebel bildet und der Sicherheitshaken dadurch gekennzeichnet ist, daß der genannte Vorsprung (c) und das genannte Loch (t) zylindrische Form aufweisen und daß die Haltemittel miteinander derart zusammenwirken, daß in der Ruhestellung des Hakens im geschlossenen Zustand in der Haltevorrichtung ein Spiel (j) zwischen den Kontaktmantellinien (g) und (g') des Zylinders und des zylindrischen Loches besteht, welches sehr viel größer ist als das Spiel, welches normalerweise erforderlich wäre, um eine gute mechanische Funktion des Sicherheitshakens zu gewährleisten, wodurch einerseits der Hakenkörper allein die Last aufnehmen kann, für die er ausgelegt ist, ohne daß eine Berührung zwischen dem Zylinder und dem zylindrischen Loch der Haltevorrichtung auftritt, oder andererseits der Sperrhebel Überlastungen aufnehmen kann, indem eine Berührung zwischen dem Zylinder und dem zylindrischen Loch nach Überwindung des Spiels aufgrund der elastischen Auslenkung des Hakenkörpers zustande kommt.

2. Sicherheitshaken nach Anspruch 1, dadurch gekennzeichnet, daß der Winkel ($\alpha$), dessen Scheitel durch den Schnittpunkt entweder der Achse des Zylinders oder der Achse des zylindrischen Loches mit der Kontaktebene der Enden des Sperrhebels und des Hakenkörpers definiert ist und dessen Seiten einerseits die eine oder andere der genannten Achsen und andererseits eine Gerade sind, welche den genannten Scheitel mit der Anlenkachse des Sperrhebels am Hakenkörper verbindet, wobei dieser Winkel sich zum Innenraum hin öffnet, der zwischen dem Sperrhebel und dem Hakenkörper angeordnet ist, einen Wert aufweist, der zwischen 80 und 90 Grad liegt, wodurch die einwandfreie Funktion der Haltevorrichtung und ein gutes Öffnen oder Schließen des Hakens gewährleistet sind.

3. Sicherheitshaken nach einem der vorstehenden Ansprüche, dadurch gekennzeichnet, daß das Spiel (j) zwischen dem 0,02- und dem 0,04-fachen des Durchmessers eines Kreises (d) ist, welcher in den Innenraum einschreibbar ist, der durch den Sperrhebel und den Hakenkörper definiert ist.

4. Sicherheitshaken, welcher mit einer Haltevorrichtung nach einem der vorstehenden Ansprüche versehen ist, dadurch gekennzeichnet, daß das Loch der Haltevorrichtung eine abgeplattete Zylinderform aufweist.

5. Sicherheitshaken, welcher mit einer Haltevorrichtung nach einem der vorstehenden Ansprüche ausgestattet ist, dadurch gekennzeichnet, daß der Zylinder der Haltevorrichtung eine abgeplattete Form aufweist.

6. Sicherheitshaken, welcher mit einer Haltevorrichtung nach den vorstehenden Ansprüche versehen ist, dadurch gekennzeichnet, daß das zylindrische Loch derart ausmündet, daß es die Befreiung jeglichen Fremdkörpers aus dem genannten Loch gestattet.

Figure 1

Figure 2

FIGURE 3